# EUROPEAN PATENT APPLICATION

(11) **EP 1 650 505 A1**
(43) Date of publication of application: **26.04.2006**
(21) Application number: 05022472.4
(22) Date of filing: 14.10.2005
(51) Int. Cl.: F24H 8/00, F24H 9/06, F24H 9/02, F24H 1/28

(54) **Condensing Boiler**

(30) Priority: 19.10.2004 IT VR20040161
(71) Applicant: I.C.I. CALDAIE S.p.A., 37059 Campagnola-Zevio VR (IT)
(72) Inventor: Pisani, Giovanni, 37135 Verona (IT)
(74) Representative: Alagem Modiano, Lara S.

(57) **Abstract**

A condensing boiler (1), comprising a framework (2) which supports a boiler body (3) provided with a furnace (4). The furnace forms internally a combustion chamber (15), which is functionally connected to a burner (6). The boiler body (3) further has; between a lateral containment shell (7) and the furnace (4), a water compartment (8), which is affected by a stream of water to be heated. The combustion chamber (5) is connected, at one of its ends, to a gas deviation chamber (9) suitable to direct the combustion gases toward a heat exchanger (100) provided with at least one flue (10), which is connected, at its inlet end (10a), to the gas deviation chamber (9). In the flue (10), the sensible heat and latent heat of the combustion gases are transferred to the water stream to be heated. The flue (10) is arranged inside the water compartment (8) and ends, with its outlet end (10b), in a gas and condensation collection chamber (11), which is connected to a stack (12) for conveying the gases and to a condensation discharge duct. The furnace (4) is arranged above the heat exchanger (100) and the framework (2) comprises two upright supporting plates (2a, 2b), which face each other and are mutually substantially parallel and support the furnace (4). The flue (10) is connected, at its opposite ends, to the upright supporting plates (2a, 2b) so that its longitudinal axis is oriented substantially at right angles to the upright supporting plates (2a, 2b), which are inclined with respect to the horizontal in order to arrange the inlet end (10a) of the at least one flue (10) at a higher level than its outlet end (10b).

## Description

The present invention relates to a condensing boiler, particularly not exclusively useful for applications in the household field.

Condensing boilers are currently used which achieve a much higher efficiency than traditional boilers because they utilize not only the sensible heat of the gases generated by combustion but also their latent heat, allowing the water vapor contained therein to condense.

In general, condensing boilers are used in systems which operate at low temperature, such as radiators having a large surface or underfloor systems, in which the temperature of the water returning to the boiler is low enough to allow the release of latent heat by the gases.

Usually, condensing boilers, and particularly boilers made of stainless steel, are of the wall-mounted type, if they have a low power rating (useful power below 35 kW), or are mounted on a footing in the case of high capacities.

Generally speaking, condensing boilers are composed of a furnace which forms internally a cylindrical combustion chamber, inside which fuel, usually a gaseous fuel, is burned, and of a heat exchanger, which is connected to the combustion chamber and is constituted by a set of passage ducts for the hot gases generated by the combustion.

Said passage ducts for the hot combustion gases are struck externally by the water to be heated and are shaped so as to recover both the sensible heat of the gases (by reducing their temperature) and their latent heat (by condensing the water vapor that has formed with the combustion).

More particularly, condensing boilers made of stainless steel are currently commercially available which are constituted substantially by a through-flame cylindrical furnace with a substantially horizontal axis and by multiple flues, which couple to the lower surface of the cylindrical furnace and are arranged substantially vertically in order to facilitate the collection of condensation by gravity. It should be noted that each one of the flues used in this embodiment is formed by two contoured plates, which are joined along their longitudinal edges in order to produce, within the space comprised therebetween, passage channels with an elongated opening and a large exchange surface, so as to achieve a higher heat exchange efficiency than ordinary ducts having a circular cross-section.

Another type of condensing boiler made of stainless steel is also known which has a through-flame furnace and a substantially vertical axis and flues which are also arranged vertically and are provided with aluminum inserts in contact with the gases.

In another type of condensing boilers there are instead exchange ducts, which are crossed internally by the water to be heated and lie in a spiral around the axis of the furnace, which is arranged substantially horizontally.

Although the condensing boilers described above are conceptually valid, they have some disadvantageous aspects, including their high manufacturing costs, which is determined mainly by their structural complexity, which makes it extremely complicated to automate some steps of the production process.

For example, in the case of the first described type, the saddle weld which allows to join the vertical flues to the furnace is difficult to perform and entails, if anthropomorphic robots are not available, the assignment of an operator who has great welding experience.

Moreover, again with particular reference to the first cited type, the two contoured plates used to provide each one of the flues have different shapes, so that the flues obtained by joining them have one end which is suitable for welding to the non-flat surfaces of the furnace. Accordingly, this determines the need to use different dies for manufacturing said contoured plates, with consequent negative repercussions on production costs.

Another drawback of currently known condensing boilers and in particular of boilers made of stainless steel is their considerable space occupation with respect to the delivered power. Accordingly, sometimes it is extremely awkward to position them within boiler rooms which can be accessed only through window wells at street level or through very narrow doors.

Moreover, again because of their space occupation, currently commercially available stainless steel condensing boilers are not suited for "open-air" wall-mounting but require the provision of an appropriate boiler room even when they are intended for household applications.

The aim of the present invention is to eliminate or in any case reduce drastically the drawbacks noted above by providing a condensing boiler which allows to achieve high efficiency while being constructively very simple.

Within this aim, an object of the present invention is to provide a condensing boiler which has a limited space occupation, so that it is suitable for an "open-air" and for wall-mounted installation.

Another important object of the present invention is to provide a condensing boiler which has a competitive production cost.

Still another object of the present invention is to provide a condensing boiler with low polluting emissions

This aim and these and other objects, which will become better apparent hereinafter, are achieved by a condensing boiler comprising a framework which supports a boiler body provided with a furnace which forms internally a combustion chamber which is functionally connected to a burner, said boiler body having, between a lateral containment shell and said furnace, a water compartment, which is affected by a stream of water to be heated, said combustion chamber being connected, at one of its ends, to a gas deviation chamber adapted to direct the combustion gases toward a heat exchanger provided with at least one flue, which is connected, at its inlet end, to said gas deviation chamber, and in which the sensible heat and latent heat of the combustion gases is transferred to said water stream, said at least one flue being arranged inside said water compartment and ending, with its outlet end, in a gas and condensation collection chamber, which is connected to a stack for conveying the gases and to a condensation discharge duct, and is characterized that said furnace is arranged above said heat exchanger, said framework comprising two upright supporting plates, which face each other and are substantially parallel and support said furnace, said at least one flue being connected, at its opposite ends, to said upright supporting plates so that its longitudinal axis is oriented substantially at right angles to said upright supporting plates, said upright supporting plates being inclined with respect to the horizontal in order to arrange the inlet end of said at least one flue at a higher level than its outlet end.

Further characteristics and advantages of the invention will become better apparent from the description of some preferred but not exclusive embodiments of a condensing boiler according to the invention, illustrated by way of non-limiting example in the accompanying drawings, wherein:
Figure 1 is a schematic longitudinal sectional view of the boiler body in a first example of embodiment;
Figure 2 is an enlarged-scale schematic sectional view, taken along a longitudinal plane, of a detail of the boiler body;

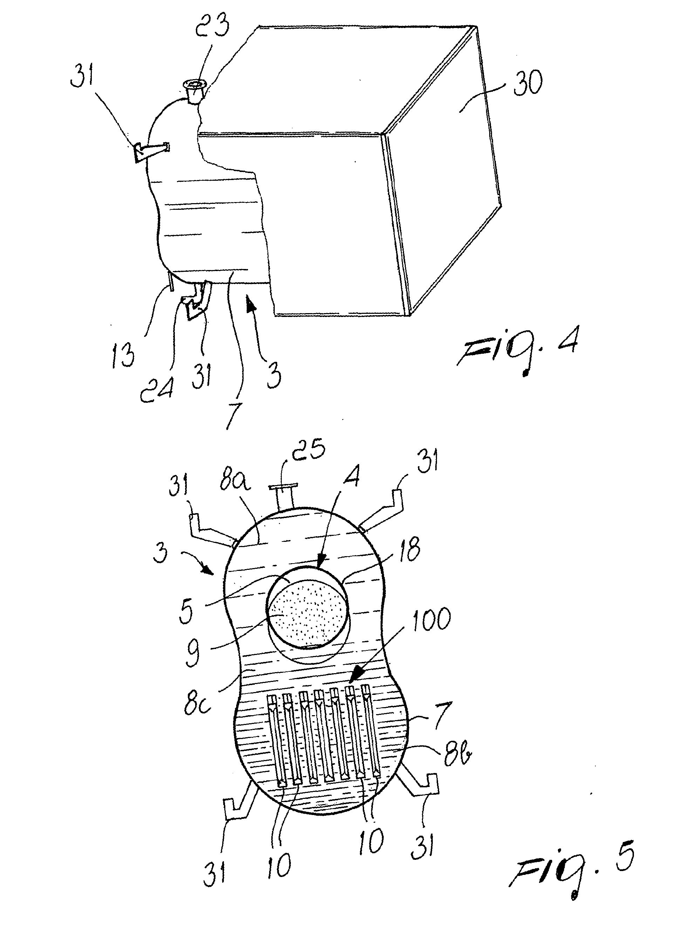

Figure 3 is a transverse sectional view of a flue of the boiler according to the invention;
Figure 4 is a perspective view of the boiler according to the invention with an external housing, which is shown in partial cross-section in order to illustrate the boiler body arranged inside it;
Figure 5 is a reduced-scale sectional view, taken along the line V-V of Figure 1;
Figure 6 is a sectional view, similar to Figure 5, but illustrating a different arrangement of flues;
Figure 7 is a partially sectional front elevation view of the condensing boiler according to the invention, wherein the boiler body is rigidly coupled to a wall of a building and in which an external housing has been omitted;

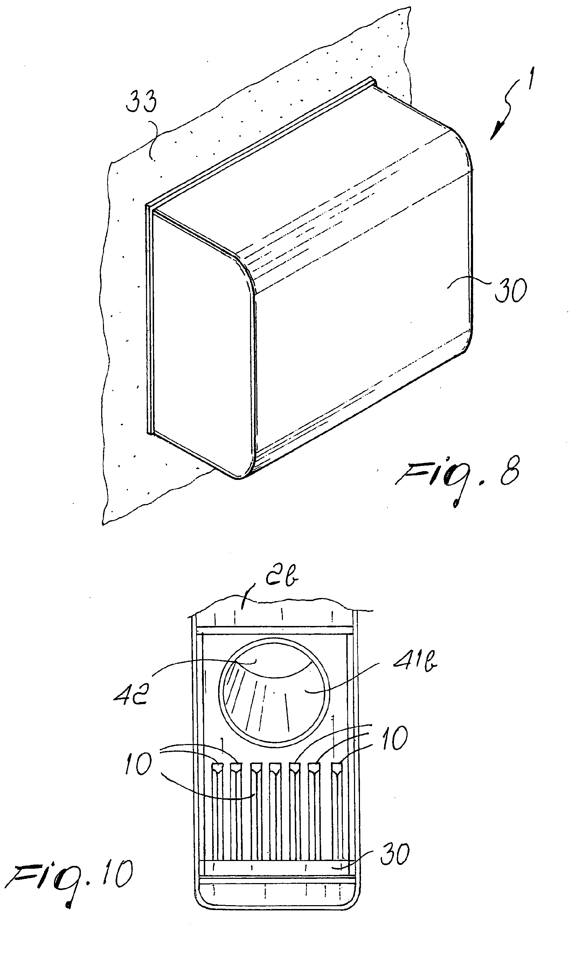

Figure 8 is a perspective view of the boiler according to the invention, mounted on a wall and with the boiler body enclosed within an external housing;
Figure 9 is a longitudinal sectional view of the boiler body according to another embodiment of the invention;

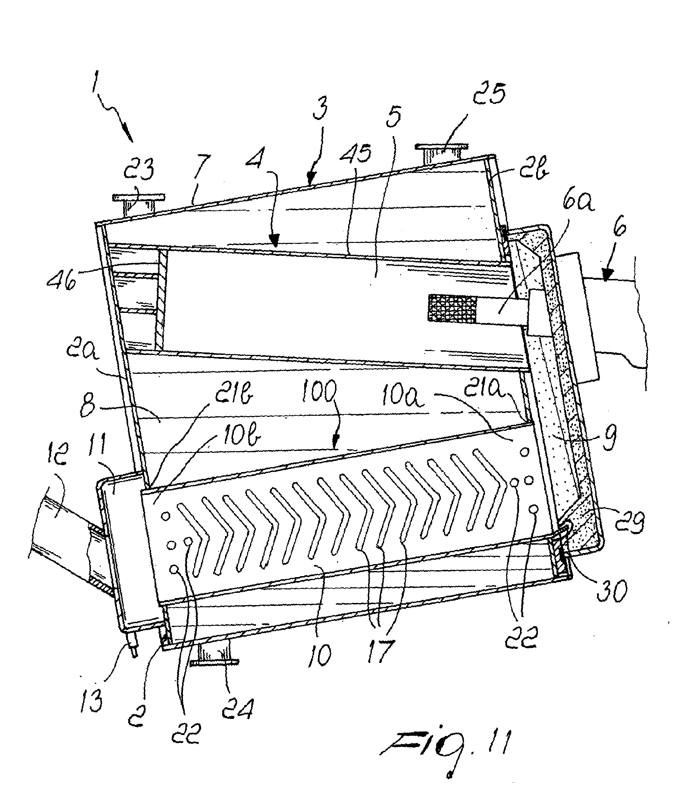

Figure 10 is a partial front elevation view of a detail of the boiler body of Figure 9, in which an inspection hatch has been omitted;
Figure 11 is a longitudinal sectional view of the boiler body according to still another embodiment;
Figure 12 is a perspective view of a shoulder for the wall-mounted installation of the boiler according to the invention;
Figure 13 is a schematic perspective view of the boiler according to the invention, installed on a wall by means of a shoulder similar to the one shown in Figure 12.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

With reference to the figures, the condensing boiler according to the invention, generally designated by the reference numeral 1, comprises a framework 2, which supports a boiler body 3.

The boiler body 3 is provided with a furnace 4, which forms a combustion chamber 5 inside which a flame develops which is generated by the combustion of fuel, which is introduced, together with the amount of the air required for combustion, by a burner 6, preferably of the type with premixing of air and gas and provided with a nozzle 6a, accommodated in the combustion chamber 5.

Moreover, the boiler body 3 is provided with a lateral containment shell 7, which encloses the furnace 4, forming a water compartment 8 which in practice constitutes a jacket into which the water to be heated is introduced; the water arrives from the return connections of external circuits which belong for example to a heating system or to a sanitary water distribution system; the warm water to be conveyed to the delivery connections of said external circuits is drawn from said jacket.

The combustion chamber 5 is connected, at one of its ends, to a deviation chamber 9, which is designed to allow the hot gases produced in the combustion chamber 5 to reach the inlet of a heat exchanger 100, which comprises one or more flues 10.

In particular, said flues 10 have an inlet end 10a, which is connected to the deviation chamber 9, and can lie within the water compartment 8, so as to be immersed completely in the water to be heated. The hot gases conveyed inside the flues 10 gradually transfer to the water to be heated, which is contained in the water compartment 8, sensible heat and latent heat of condensation, generating condensation.

The flues 10 end, with their outlet end 10b, in a gas and condensation collection chamber 11, from which the combustion gases, which are by now cold, exit through a conveyance stack 12, in order to be dispersed in the atmosphere, while the condensation that has formed in the flues 10 can flow out through a discharge duct 13, optionally controlled by a valve 13a.

According to the invention, the furnace 4 is arranged above the heat exchanger 100, and also according to the invention, the framework 2 comprises two upright supporting plates 2a and 2b, which face each other and are substantially parallel.

Said upright supporting plates 2a and 2b support both the furnace 4 and the flues 10 at their respective opposite ends.

More specifically, the flues 10 are connected to the upright supporting plates 2a and 2b so that their longitudinal axis is oriented substantially at right angles to said upright supporting plates 2a and 2b.

Said plates, in turn, are arranged at an angle with respect to the horizontal, so that the inlet end 10a of the flues 10 is arranged at a higher level than their outlet end 10b. Thanks to this arrangement, and also to the fact that the flues 10 conveniently are substantially straight, regular drainage by gravity of the condensation formed inside the flues 10 toward the gas and condensation collection chamber 11 is facilitated. In particular, the flues 10 can thus be arranged advantageously so that their corresponding axes are inclined with respect to the horizontal at an angle at least greater than 0.1°.

As described in greater detail hereinafter, the combustion chamber 5 also conveniently has, in at least one of its portions, an orientation which is inclined with respect to the horizontal so as to facilitate the drainage of the condensation which may have formed inside it toward its end connected to the deviation chamber 9.

Advantageously, the flues 10 have, in a transverse cross-section, a passage opening whose shape is elongated along a main direction, so as to have a larger heat exchange surface than ducts which have a transverse cross-section with a circular opening of equal size.

In particular, each flue 10 is conveniently constituted by two heat exchange plates 14a and 14b, which face each other and are joined hermetically one another, at least at their opposite longitudinal edges 15a, so as to form two opposite internal main surfaces, which delimit at least one passage channel for the combustion gases.

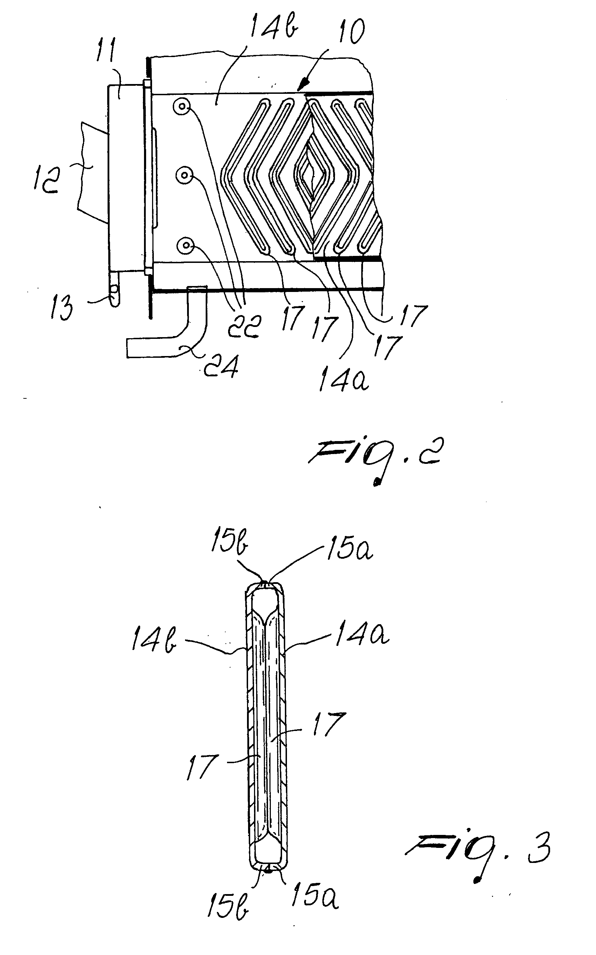

Preferably, the heat exchange plates 14a and 14b are provided by pressing and have a substantially identical shape. Conveniently, in order to generate turbulence and increase heat exchange in the flues 10, the heat exchange plates 14a and 14b are both provided, on their larger faces, with multiple corrugations 17, which are arranged in a herringbone pattern and so as to face each other along the longitudinal extension of said heat exchange plates 14a and 14b. In particular, as shown in Figure 2, the heat exchange plates 14a and 14b are assembled in such a manner that the corrugations 17 of one plate are orientated in the opposite direction with respect to those of the other plate.

Moreover, the heat exchange plates 14a and 14b can be provided conveniently, at their longitudinal ends, with protrusions 22, which protrude from their internal faces and act as spacers in order to ensure the necessary resistance to the pressure that the water contained in the water compartment 8 applies to the external surface of the flues 10 at their inlet end 10a and outlet end 10b.

Advantageously, each flue 10 has its inlet end 10a and its outlet end 10b connected by butt-welding to the respective upright supporting plates 2a and 2b and inserted in corresponding through openings 21 a and 21b formed in the upright supporting plates 2a and 2b.

It should be noted that the welded connection between the flues 10 and the upright supporting plates 2a and 2b can be provided without difficulty, since in the connecting points the flues 10 are arranged at right angles to the upright supporting plates 2a and 2b. It should also be noted that because of the inclination of the upright supporting plates 2a and 2b with respect to the horizontal, the flues 10 also are inclined, with their axis, with respect to the horizontal without having to weld them directly to the upright supporting plates 2a and 2b so that their axis is inclined; in the case of flues provided by coupled heat exchange plates, this would force the use of heat exchange plates having different contours in order to obtain flues in which the opposite end sides lie on planes which are not perpendicular to the axis of said flues, with a consequent cost increase.

Conveniently, the furnace 4 comprises at least one tubular body, which forms axially a respective substantially cylindrical portion of the combustion chamber 5.

Advantageously, the combustion chamber 5 is structured so that the ratio between the longitudinal extension and the diametrical extension of at least one substantially cylindrical portion thereof is comprised substantially between 3 and 4. Moreover, the combustion chamber 5 can be provided conveniently with internal fins or with at least one diaphragm (not shown) in order to increase heat exchange.

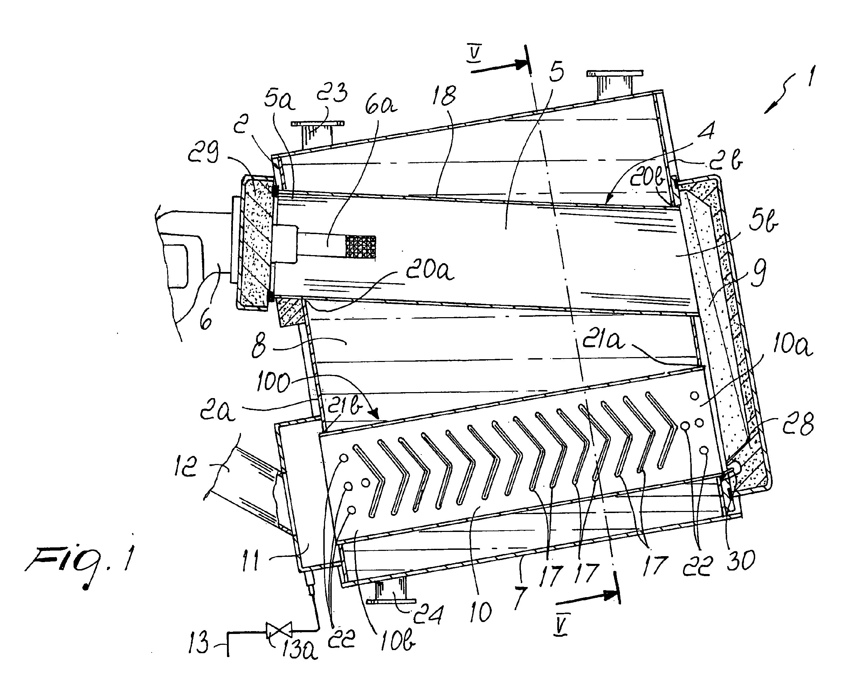

In greater detail, and with reference to a first embodiment of the invention, which is currently preferred and is shown in particular in Figure 1, the furnace 4 is constituted by a single tubular body 18, which is supported, at its opposite ends, by the upright supporting plates 2a and 2b.

In particular, said tubular body 18 forms internally a substantially cylindrical portion of the combustion chamber 5, which preferably has a longitudinal extension to diametrical extension ratio comprised substantially between 3 and 4.

In particular, the substantially cylindrical portion of the combustion chamber 5 formed by the tubular body 18 is connected, at a first end 5a, to the burner 6, and is connected, at a second end 5b which lies opposite the first end 5a, to the gas deviation chamber 9.

It should be noted that in order to allow effective conveyance of the condensation which may have formed in the combustion chamber 5 toward the deviation chamber 9 (so as to then allow to convey the condensation into the flues 10 and then collect it in the gas and condensation collection chamber 11), the tubular body 18 is arranged conveniently so that its axis is inclined with respect to the upright supporting plates 2a and 2b, so that the height of the second end 5b is lower than the height of the first end 5a. More particularly, it is preferable to arrange the tubular body 18 so that its axis is inclined with respect to the horizontal at an angle of at least more than 0.1°.

Again with reference to the embodiment of Figure 1, both of the ends of the tubular body 18 are accommodated in holes 20a and 20b, which are provided respectively in the upright supporting plates 2a and 2b and are fixed to the respective upright supporting plates 2a and 2b by welding. More specifically, the end of the tubular body 18 which corresponds to the first end 5a of the substantially cylindrical portion of the combustion chamber 5 is connected to the upright supporting plate 2a preferably by edge welding, while the opposite end of the tubular body 18, which corresponds to the second end 5 a of the substantially cylindrical portion of the combustion chamber 5, is joined to the upright supporting plate 2b preferably by butt-welding.

Merely by way of example, it is possible to weld the tubular body 18 to the supporting plates 2a and 2b so that its axis forms, with respect to said upright supporting plates 2a and 2b, an angle of inclination of approximately 2° and so that the upright supporting plates 2a and 2b are arranged at an angle, with respect to the vertical, of approximately 1°, so that the substantially cylindrical portion of the combustion chamber 5 formed by the tubular body 18 and the flues 10 are inclined, with their respective axes, at an angle of approximately 1° with respect to the horizontal.

Another important aspect of the invention is the fact that within the water compartment 8 there flows a stream of water to be heated, which is advantageously in countercurrent with respect to the direction of flow of the hot gases inside the flues 10, in order to allow the highest heat exchange and the greatest generation of condensation.

In detail, the water compartment 8 advantageously has a first inlet 23, which is formed on the lateral containment shell 7 and can be connected to a medium-temperature water return circuit, not shown in the figures, and a second inlet 24, which is again formed on the lateral containment shell 7 and can be connected to a low-temperature water return circuit, also not shown, in order to allow the condensing boiler according to the invention to work even with mixed systems, i.e., systems operating a medium and low temperature.

Moreover, the water compartment 8 can be connected, through an outlet 25 formed in the upper part of the lateral containment shell 7, to a hot water delivery circuit, not shown, which reaches for example the heating system or the sanitary water distribution system. The outlet 25 is arranged advantageously at a greater height than the remaining part of the lateral containment shell 7. In this manner, the outlet 25, besides acting as a water delivery, is meant also as an automatic outward air vent for the water compartment 8.

Conveniently, the outlet 25 is arranged substantially proximate to the upright supporting plate that supports the inlet end of the flues 10 and which, in the illustrated examples, corresponds to the one designated by the reference numeral 2b. Advantageously, the first inlet 23 is arranged substantially proximate to the upright supporting plate that supports the outlet end of the flues 10 and in the illustrated examples is the upright supporting plate 2a.

Conveniently, the second inlet 24 is arranged proximate to the outlet ends 10b of the flues 10, in order to allow transfer of the residual heat of the gases being evacuated from the flues 10, by utilizing the temperature difference between said gases and the low-temperature return water.

Preferably, the second inlet 24 is formed at a lower portion of the lateral containment shell 7, so that the water that arrives from the low-temperature water return circuit enters from the bottom of the water compartment 8, while the first inlet 23 is arranged on an upper portion of the lateral containment shell 7, so that the water that arrives from the medium-temperature water return circuit enters the water compartment 8 from above. This technical choice is important, since the return water, which is at a temperature below the dew point of the gases, is essentially important for the good operation of a condensing boiler according to the invention and therefore must be well separated from the medium-temperature return water.

Conveniently, the water compartment 8 can be provided with means adapted to separate the water streams which enter from the first inlet 23 with respect to the streams which enter from the second inlet 24, in order to prevent gas condensation from being inhibited by their mixing. In particular, the water compartment 8 can be provided with one or more hydraulic separation partitions, not shown, which by protruding from the internal surface of the lateral containment shell 7 allow to convey the water streams which enter the water compartment 8 along respective forced paths, which are at least initially mutually separate.

In order to effectively withstand the hydraulic pressure, the lateral containment shell 7 advantageously has a contour which forms, in the water compartment 8, an upper portion 8a, which accommodates at least partially the furnace 4, and a lower portion 8b, which accommodates at least partially the flues 10. The upper portion 8a and the lower portion 8b are joined by a connecting portion 8c, which has the particularity of having smaller lateral dimensions, along the direction of main extension of the water compartment 8, than the upper portion 8a and the lower portion 8b. Preferably, the lateral containment shell 7 is contoured so as to have, in a transverse cross-section with respect to its longitudinal extension, a substantially figure-of-eight shape, as can be seen in Figures 5 and 6.

Alternatively, the lateral containment shell 7 can be contoured so that the water compartment 8 has, transversely with respect to its longitudinal extension, a substantially ellipsoidal shape. In order to contrast the hydraulic pressure in the water compartment 8, it is further possible to provide , inside said water compartment 8, one or more tension members (not shown), which join mutually facing internal regions of the lateral containment shell 7.

As can be seen again in Figures 5 and 6, in order to prevent the formation of condensation films on the larger internal walls of the flues 10, tending to inhibit generation of new condensation droplets and consequently reducing the efficiency of the boiler according to the invention, the flues 10 can be conveniently arranged substantially parallel to each other and so that the main direction of their passage opening is oriented substantially vertically, or can be arranged so that the main direction of their passage opening is oriented substantially radially around the tubular body 18 or, more simply, some of them can have the main direction of their passage opening inclined with respect to the vertical, while the remaining part thereof has the main direction of its passage opening arranged vertically.

Advantageously, the gas deviation chamber 9 is formed on the internal portion of an inspection hatch 28, which is lined with thermally insulating material and makes it easy to reach the furnace 4 for its maintenance and cleaning.

Conveniently, in the gas deviation chamber 9 and in particular substantially below the flues 10 there is at least one conveyance fin 30, which collects any condensation generated in the combustion chamber 5, which is transferred into the deviation chamber 9 in order to convey it into the flues 10.

With reference to the embodiment of Figure 1, it is noted that the combustion chamber 5 is preferably closed, at the first end 5a, by a thermally insulated closure body 29, which is crossed by the burner 6 and is advantageously rigidly coupled to the boiler body 3 by quick-type couplings, not shown, which allow straightforward opening for inspection of the combustion chamber 5.

Furthermore, it should be noted that the boiler according to the invention is provided conveniently with an external housing 30, which encloses completely both the boiler body 3 and the burner 6, so as to protect them from atmospheric agents and in particular from infiltrations of rainwater. This makes the boiler according to the invention suitable for an "open air" external installation, without having to resort to appropriately provided recesses or cabinets or protective boxes for outdoor use.

Conveniently, the external housing 30 is formed monolithically and is supported by the boiler body 3 by means of appropriately provided connecting brackets 31, which are fixed to the external surface of the lateral containment shell 7.

Preferably, the furnace 4 and the heat exchanger 100 are arranged one above the other along a substantially vertical direction, so as to make the boiler body 3 laterally compact with respect to its longitudinal extension and therefore make it particularly suitable for wall-mounted installation.

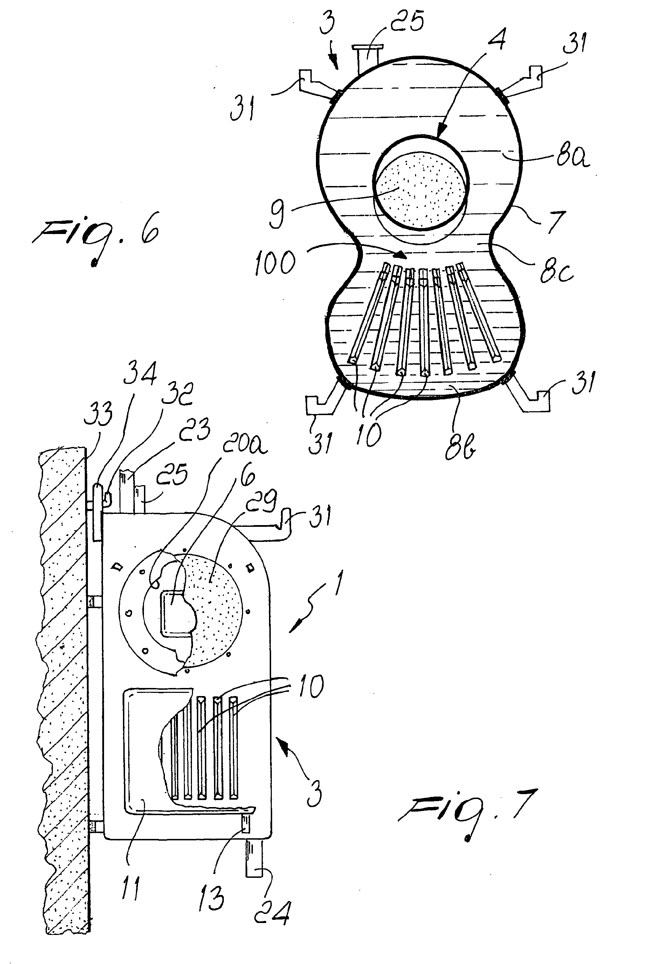

More particularly, it is conveniently possible to provide means for anchoring the boiler body 3 to the wall 33 of a building, which can comprise for example at least one hook 32, which is fixed to the wall 33 and can be engaged by a slotted element 34 supported by the boiler body 3, in order to allow the wall-mounted installation of the boiler body 3, as shown in Figure 7. It should be noted that the boiler body 3 must hang from the wall 33 ensuring that the upper generatrix of the lateral containment shell 7 is not parallel to the horizontal; this allows to achieve the inclination that allows all the components, i.e., the combustion chamber 5 and the flues 10, to drain the condensation down to the gas and condensation collection chamber 11.

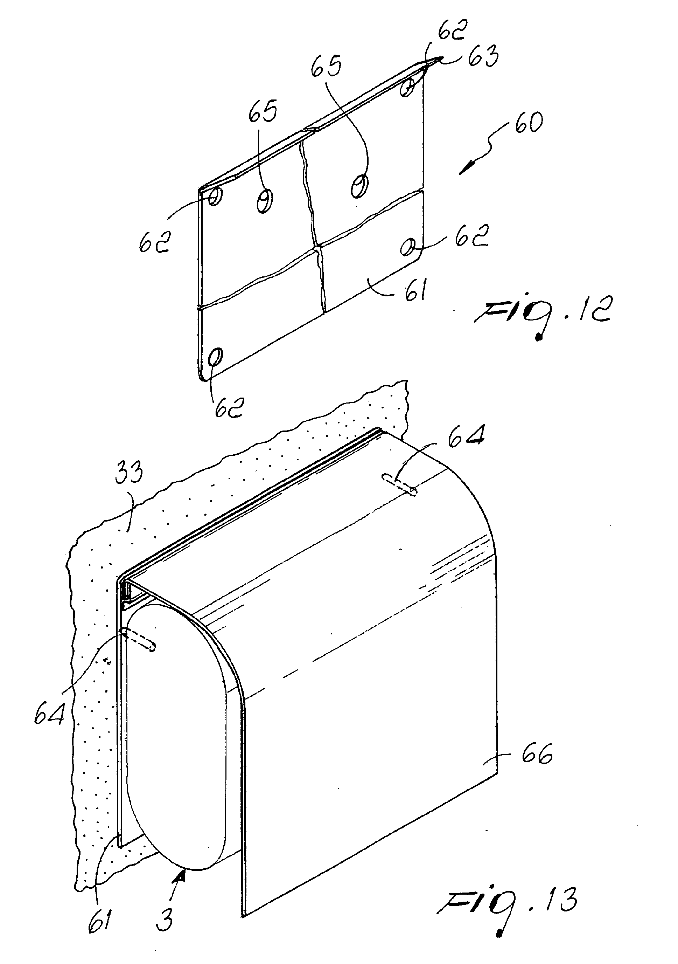

Conveniently, for the wall-mounted installation of the boiler according to the invention it is further possible to use a shoulder 60, shown in Figure 12, constituted by a plate-like element 61, which can be fixed to the wall 33 of a building, for example by way of screw-type connection means or the like which can engage holes 62 formed therein. In greater detail, the plate-like element 61 has an upper rim 63 which is optionally folded so that it protrudes from the face of the plate-like element 61 that lies opposite the face meant to face the wall 33.

The plate-like element 61 is advantageously made of a material which is resistant to atmospheric agents, such as for example stainless steel or galvanized steel, and can be provided, on its face which lies opposite the wall 33, with reference elements 64, which can be coupled to appropriately provided abutment regions formed on the side of the boiler body 3 meant to be directed toward the wall 33, in order to allow the correct wall-mounted installation of the boiler body 3. In other words, the reference elements 64 allow to position simply and rapidly the boiler body 3 with the selected inclination of the flues 10 with respect to the horizontal.

In practice, when the boiler according to the invention is installed, it is possible to initially fix the shoulder 60, taking care to arrange the upper rim 63 level, and then engage the boiler body 3 with the reference elements 64, so as to ensure the correct inclination of the boiler body 3.

Said reference elements 64 can be constituted for example by rod-like inserts, which can be anchored, at one of their ends, to the wall 33 through openings 65 provided appropriately in predefined positions on the plate-like element 61, so that they protrude from the face of the plate-like element 61 that lies opposite the wall 33. In practice, the reference elements 64 constitute, with their other end, anchoring elements meant to support, in a wall-mounted configuration, the boiler body 3.

Advantageously, in the case of an "open-air" installation, it is possible to rigidly couple to the shoulder 60 an upper covering body 66, which can be used instead of the external housing 30 mentioned above to protect the boiler body 3 against atmospheric agents.

Optionally, it is also possible to interpose, between the shoulder 60 and the wall 33, a layer of sealing material, such as silicone or the like, in order to avoid possible infiltrations of water between the wall 33 and the boiler body 3. For example, the region of space delimited between the wall 33 and the upper rim 63 is treated with silicone.

It is therefore evident that substantially the shoulder 60 acts at the same time as a covering or housing element, which allows to insulate the boiler according to the invention from the wall 33, as anchoring for any remaining covering (constituted by said upper covering body 65), and as a template for facilitating the placement of the anchoring elements (constituted by the reference element 64 themselves) meant to support the boiler body 3.

Optionally, the boiler body 3 can also be provided, in a downward region, with feet whose height can be adjusted, allowing to position it on the ground with the possibility to vary its inclination with respect to the horizontal and accordingly also vary the inclination of the flues 10.

Preferably, the tubular body 18 of the furnace 4 is made of stainless steel (such as for example AISI 316L or AISI 316Ti), and so are the flues 10.

Operation of the condensing boiler according to the invention can be deduced easily from what has been described above and in particular it is evident that as a consequence of the process of combustion of the fuel, introduced by the burner 6 by means of its nozzle 6a, a flame is generated inside the combustion chamber 5 formed by the furnace 4 and strikes the combustion chamber 5, generating hot gases, which at least as a first approximation contain carbon dioxide, water vapor and nitrogen.

Said hot gases, after flowing through the combustion chamber 5, enter the deviation chamber 9 and enter the flues 10, inside which they transfer their sensible heat and the latent heat of the water vapor generated in the combustion process.

Inside the gas and condensation collection chamber 11, the gases which are now cold and the condensation generated inside the flues 10 and any condensation formed within the combustion chamber 5 are then collected.

The invention thus conceived is susceptible of numerous modifications and variations, all of which are within the scope of the appended claims.

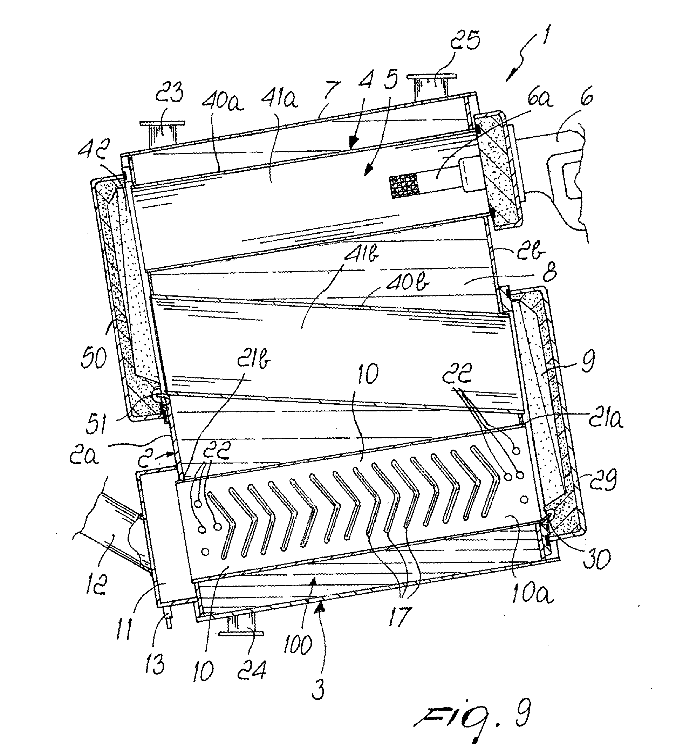

Thus, for example, in another embodiment of the invention, illustrated in particular in Figure 9, the furnace 4 comprises at least two tubular bodies, respectively an upper tubular body 40a and a lower tubular body 40b, both of which are supported, at their respective opposite ends, by the upright supporting plates 2a and 2b and form respectively a first substantially cylindrical portion 41 a and a second substantially cylindrical portion 41b of the combustion chamber 5. Said first and second substantially cylindrical portions 41a and 41 b are connected in series by a connecting chamber 42. In particular, the first substantially cylindrical portion 41 a is connected, at a longitudinal end, to the burner 6 and is connected, at its other longitudinal end, to the connecting chamber 42. The second substantially cylindrical portion 41 b is instead connected, at a first end, to the connecting chamber 42 and, at a second end, to the gas deviation chamber 9.

In order to facilitate effective drainage of the condensation, the lower tubular body 40b is inclined with its axis, with respect to the upright supporting plates 2a and 2b, so that the first end of the second substantially cylindrical portion 41 b is arranged at a higher level than its second end. It should be noted that the inclination of the lower tubular body 40b is such as to ensure that the axis of the second substantially cylindrical portion 41b is inclined with respect to the horizontal at an angle at least greater than 0.1 °, taking into account the inclination with respect to the horizontal provided for the upright supporting plates 2a and 2b.

It should also be noted that the upper tubular body 40a can be welded substantially at right angles to the upright supporting plates 2a and 2b. The inclination of said plates with respect to the horizontal in fact allows to obtain an inclination of the axis of the first substantially cylindrical portion 41a with respect to the horizontal which allows to drain the condensation toward its end which is connected to the connecting chamber 42. Preferably, the first substantially cylindrical portion 41 a also is inclined with respect to the horizontal by an angle at least greater than 0.1°.

As can be seen again in Figure 9, the connecting chamber 42 is conveniently formed on the internal side of a hatch 50, which can be opened and is lined with thermally insulating material, and can advantageously accommodate a drainage fin 51, which allows to guide the condensation formed in the first substantially cylindrical portion 41 a toward the second substantially cylindrical portion 41b.

Preferably, the lower tubular body 40b has its opposite end faces arranged on respective planes which are substantially parallel to the upright supporting plates 2a and 2b. The lower tubular body 40b thus structured can be for example provided easily by wrapping around a calendering roller a flat sheet in which the two edges meant to be arranged transversely to the wrapping axis respectively form a circular arc which protrudes toward the outside of the sheet and a circular arc which is shaped complementarily and is recessed toward the inside of the sheet.

According to another constructive variation, illustrated by way of example in Figure 11, the furnace 4 is constituted by a single tubular body 45, which is arranged so that its axis is inclined with respect to the upright supporting plates 2a and 2b and forms internally a substantially cylindrical portion of the combustion chamber 5, which at a first end is closed by a bottom 46 and at its other end, located at a lower level than the first end, is connected to the burner 6 and to the gas deviation chamber 9. The furnace 4 thus structured is accordingly of the type known as "flame reversal", i.e., of the type in which the gases generated by the flame produced by the burner 6, after traveling longitudinally through the combustion chamber 5, reaching the bottom 46, reverse their motion to travel toward the deviation chamber 9, consequently undergoing another deviation of their motion toward the inlet end 10a of the flues 10. It should be noted that preferably the inclination of the single tubular body 45 with respect to the upright supporting plates 2a and 2b and the inclination of the upright supporting plates 2a and 2b with respect to the horizontal are such that the inclination of the substantially cylindrical portion of the combustion chamber 5 formed by the single tubular body 45 is inclined with its axis, with respect to the horizontal, by at least more than 0.1°. As can be seen, in the embodiment of Figure 11 the burner 6 can be supported advantageously by the inspection hatch 29.

All the characteristics of the invention that have been described above as advantageous, convenient or the like may also be omitted or be replaced with equivalents.

The individual characteristics described with reference to general teachings or particular embodiments may all be present in other embodiments or may replace characteristics in said other embodiments.

In practice it has been found that the invention has achieved the intended aim and objects in all of the embodiments.

In particular, the fact is stressed that thanks to its particular structure, with the furnace welded not at right angles to the upright supporting plates and provided with a combustion chamber with a high length/diameter ratio and with flues arranged below the furnace and welded at right angles to the upright supporting plates, which are inclined with respect to the horizontal, the boiler body, which has a high power capacity in relation to its compact dimensions, is suitable for wall-mounted installation, thus providing a valid alternative to currently known wall-mounted condensing boilers, which have a lower power capacity and are arranged in batteries.

Another advantage of the invention consists of the possibility to fasten the boiler body to a wall even externally, thanks to the external housing, which makes it suitable for "open-air" installation.

Moreover, it should be added that any use of the through-flame furnace reduces significantly the formation of NOₓ (i.e., polluting emissions) and considerably simplifies the construction of the boiler body.

In practice, the materials used, as well as the dimensions and shapes, may be any according to requirements.

All the details may further be replaced with other technically equivalent elements.

The disclosures in Italian Patent Application No. VR2004A000161 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A condensing boiler, comprising a framework which supports a boiler body provided with a furnace which forms internally a combustion chamber which is functionally connected to a burner, said boiler body having, between a lateral containment shell and said furnace, a water compartment, which is affected by a stream of water to be heated, said combustion chamber being connected, at one of its ends, to a gas deviation chamber adapted to direct the combustion gases toward a heat exchanger provided with at least one flue, which is connected, at its inlet end, to said gas deviation chamber, and in which the sensible heat and latent heat of the combustion gases are transferred to said water stream to be heated, said at least one flue being arranged inside said water compartment and ending, with its outlet end, in a gas and condensation collection chamber, which is connected to a stack for conveying the gases and to a condensation discharge duct, **characterized** that said furnace is arranged above said heat exchanger, said framework comprising two upright supporting plates, which face each other and are mutually substantially parallel and support said furnace, said at least one flue being connected, at its opposite ends, to said upright supporting plates so that its longitudinal axis is oriented substantially at right angles to said upright supporting plates, said upright supporting plates being inclined with respect to the horizontal in order to arrange the inlet end of said at least one flue at a higher level than its outlet end.

2. The condensing boiler according to claim 1, **characterized in that** at least one part of said combustion chamber has, with respect to the horizontal, an inclination which is adapted to drain the condensation formed therein toward its end connected to said gas deviation chamber.

3. The condensing boiler according to one or more of the preceding claims, **characterized in that** said at least one flue has, in a transverse cross-section, a passage opening which is elongated along a main direction.

4. The condensing boiler according to one or more of the preceding claims, **characterized in that** said at least one flue comprises two mutually facing heat exchange plates, which are joined hermetically one another at least along their opposite longitudinal edges in order to form, in the space comprised therebetween, at least one passage channel for the combustion gases.

5. The condensing boiler according to one or more of the preceding claims, **characterized in that** the inlet end and the outlet end of said at least one flue are connected by butt-welding to the respective upright supporting plates at respective through openings formed within said upright supporting plates.

6. The condensing boiler according to one or more of the preceding claims, **characterized in that** said at least one flue is arranged, with respect to the horizontal, so that it is inclined with its axis at an angle of at least more than 0.1°.

7. The condensing boiler according to one or more of the preceding claims, **characterized in that** said furnace comprises at least one tubular body, which forms a respective substantially cylindrical portion of said combustion chamber, said at least one tubular body being arranged so that its own axis is inclined with respect to said upright supporting plates.

8. The condensing boiler according to one or more of the preceding claims, **characterized in that** the ratio between the longitudinal extension and the diametrical extension of at least one substantially cylindrical portion of said combustion chamber is comprised substantially between 3 and 4.

9. The condensing boiler according to one or more of the preceding claims, **characterized in that** it comprises at least one substantially cylindrical portion of said combustion chamber which is arranged so that its axis is inclined with respect to the horizontal by an angle at least greater than 0.1°.

10. The condensing boiler according to one or more of the preceding claims, **characterized in that** said water stream is in countercurrent with respect to the path of the combustion gases inside said at least one flue.

11. The condensing boiler according to one or more of the preceding claims, **characterized in that** said water compartment has a first inlet, which is formed in the upper part of said lateral containment shell, substantially proximate to the supporting plate which supports the outlet end of said at least one flue, and can be connected to a medium-temperature water return circuit; a second inlet, which is formed in the lower part of said lateral containment shell, substantially proximate to the outlet end of said at least one flue, and can be connected to a low-temperature water return circuit; and an outlet, which is formed in the upper part of said lateral containment shell substantially proximate to the upright supporting plate which supports the inlet end of said at least one flue and can be connected to a hot water delivery circuit.

12. The condensing boiler according to one or more of the preceding claims, **characterized in that** said lateral containment shell has a contour which forms, in said water compartment, an upper portion which accommodates at least partially said furnace and a lower portion which accommodates at least partially said at least one flue, a connecting portion being interposed between said upper portion and said lower portion and having shorter lateral dimensions, along the main extension of said water compartment, than said upper portion and said lower portion.

13. The condensing boiler according to one or more of the preceding claims, **characterized in that** it comprises, in said gas deviation chamber, at least one fin for conveying the condensation generated in said combustion chamber toward said at least one flue.

14. The condensing boiler according to one or more of the preceding claims, **characterized in that** said furnace comprises a single tubular body which is supported, at its opposite ends, by said upright supporting plates and is arranged so that its own axis is inclined with respect to said upright supporting plates, said single tubular body forming internally a substantially cylindrical portion of said combustion chamber which is connected, at a first end, to said burner, and is connected, at a second end, which lies opposite said first end, to said gas deviation chamber, said first end being located at a higher level than said second end.

15. The condensing boiler according to one or more of the preceding claims, **characterized in that** said furnace comprises at least two tubular bodies, respectively an upper tubular body and a lower tubular body, both of which are supported, at their respective opposite ends, by said upright supporting plates and form respectively a first substantially cylindrical portion and a second substantially cylindrical portion of said combustion chamber, said first and second substantially cylindrical portions being mutually connected in series by a connecting chamber, said first substantially cylindrical portion being connected, at a longitudinal end, to said burner, and being connected, at its other longitudinal end, to said connecting chamber, said second substantially cylindrical portion being connected, at a first end, to said connection chamber and, at a second end, to said gas deviation chamber, said lower tubular body having its axis inclined with respect to said upright supporting plates in order to arrange said second substantially cylindrical portion so that said first end is at a higher level than said second end.

16. The condensing boiler according to one or more of the preceding claims, **characterized in that** said furnace comprises a single tubular body, which is arranged so that its axis is inclined with respect to said upright supporting plates, said single tubular body forming internally a substantially cylindrical portion of said combustion chamber, which at a first end is closed by a bottom and at its other end is connected to said burner and to said gas deviation chamber.

17. The condensing boiler according to one or more of the preceding claims, **characterized in that** said furnace and said heat exchanger are mutually stacked along a substantially vertical direction.

18. The condensing boiler according to one or more of the preceding claims, **characterized in that** it comprises an external housing, which is formed monolithically and is supported by said boiler body by means of connecting brackets, which are fixed to the external surface of said lateral containment shell.

19. The condensing boiler according to one or more of the preceding claims, **characterized in that** it comprises means for anchoring to the wall of a building for the wall-mounted installation of said boiler body.

20. The condensing boiler according to one or more of the preceding claims, **characterized in that** it comprises a shoulder constituted by a plate-like element, which can be fixed to a wall of a building and can be provided, on its face which lies opposite the wall, with reference elements which can be coupled to abutment regions formed on the side of said boiler body meant to be directed toward the wall in order to allow the correct wall-mounted arrangement of said boiler body.

21. The condensing boiler according to one or more of the preceding claims, **characterized in that** said heat exchanger comprises a plurality of flues, each of which has, in transverse cross-section, a passage opening which is elongated along a main direction, said flues being parallel to each other and so that said main direction is oriented substantially vertically.

22. The condensing boiler according to one or more of the preceding claims, **characterized in that** said heat exchanger comprises a plurality of flues, each of which has, in transverse cross-section, a passage opening which is elongated along a main direction, at least one part of said flues being arranged so that main direction is inclined with respect to the vertical.
